# EUROPEAN PATENT APPLICATION

(11) **EP 3 567 217 A1**
(43) Date of publication of application: **13.11.2019**
(21) Application number: 19162012.9
(22) Date of filing: 11.03.2019
(51) Int. Cl.: F01D 5/18, F01D 9/06

(54) **AIRFOIL COOLING SYSTEM, CORRESPONDING BAFFLE AND METHOD OF INSERTING**

(30) Priority: 11.05.2018 US 201815977564
(71) Applicant: United Technologies Corporation, Farmington, CT 06032 (US)
(72) Inventor: ANDERSON, Corey D., East Hartford, CT Connecticut 06118 (US); SPANGLER, Brandon W., Vernon, CT Connecticut 06066 (US)
(74) Representative: Dehns

(57) **Abstract**

A baffle (32; 72; 92; 182) for airfoil cooling contains multiple segments (48, 50; 84, 86; 108, 110; 188, 190) capable of nesting within each other. When the segments (48, 50; 84, 86; 108, 110; 188, 190) are nested within each other, the baffle (32; 72; 92; 182) is in a collapsed state, and is capable of insertion into an airfoil (30; 70; 90; 180) around an obstruction platform (52; 104; 192) or rail (36; 96). The multiple segments (48, 50; 84, 86; 108, 110; 188, 190) can be expanded after insertion so that the cavity of the airfoil (30; 70; 90; 180) is filled with the baffle (32; 72; 92; 182).

## Description

### BACKGROUND

This application relates generally to airfoil cooling systems, and specifically to airfoil baffles.

Airfoils can contain baffles residing in their cavities. Baffles increase cooling air flow and allow more efficient cooling throughout the airfoil. Typically, airfoils are highly contoured, resulting in airfoil chord thickness and chord length that vary as a function of airfoil span. As a result, most baffles can only be inserted into an airfoil from one direction, either from the inner diameter (ID) or outer diameter (OD) of the airfoil.

In some instances, features on the airfoil platform further constrict baffle insertion into the airfoil cavity. For example, vane rails may encroach on the OD or ID baffle cavity insertion points ("breakouts"), and prevent baffles from extending as far axially as may be desired from an airfoil cooling perspective. In fact, a larger gap between the baffle and the interior airfoil cavity walls results in decreased Reynolds numbers, decreased convective heat transfer coefficients, and increased pressure losses. This results in less effective airfoil cooling, decreasing the lifespan of airfoils.

### SUMMARY

In one aspect of the present invention, an airfoil cooling system includes an airfoil and a baffle. The airfoil includes a platform, an airfoil body extending from the platform in an axial direction of the airfoil, a main cavity in the airfoil body, and a breakout hole. The main cavity includes a first portion and a second portion. The breakout hole is in the platform axially aligned and sized with the first portion of the main cavity, wherein the breakout hole is misaligned with the second portion of the main cavity. The baffle is inside the main cavity, the baffle includes a first baffle segment filling the first portion of the main cavity, and a second baffle segment locked to and axially extendable from within the first baffle segment to fill the second portion of the main cavity.

In another aspect of the present invention, a baffle for use in an airfoil includes a first segment having first and second snap joint protrusions, and a second segment nested within the first segment, the second segment having first and second snap joint recesses configured to lock with the first and second snap joint protrusions.

In another aspect of the present invention, a method of inserting a baffle into an airfoil includes inserting an expanding baffle into a cavity of the airfoil through a breakout hole, wherein the expanding baffle comprises a first segment and a second segment, subsequently translating the second segment into the cavity of the airfoil in an aft direction to fill the cavity, and subsequently locking the second segment and the first segment to each other with a joint.

### BRIEF DESCRIPTION OF THE DRAWINGS

FIGS. 1A-1B show cross-sectional views of airfoils with baffles as disclosed in prior art.
FIGS. 2A-2B show cross-sectional views of an airfoil vane with a two-segment expanding baffle.
FIGS. 3A-3F are cross-sectional views illustrating steps of a method of inserting a multi-segmented expanding baffle into an airfoil vane.
FIGS. 4A-4E are schematic diagrams of a multi-segmented expanding baffle with snap fit joints.
FIG. 5 is a cross-sectional view of a multi-cavity airfoil vane containing an expanded multi-segment baffle.
FIG. 6 is a cross-sectional side view of an airfoil vane with baffle-obstructing aft rails and containing an expanded multi-segment baffle.
FIGS. 7A-7B are cross-sectional views of an airfoil blade containing a multi-segmented expanding baffle.

### DETAILED DESCRIPTION

A multi-segmented baffle that is collapsible can fit into an airfoil through a restricted breakout hole in a platform. Once the collapsed baffle is inserted into the airfoil cavity, the baffle can be expanded to fill the cavity, including into the portion of the cavity that is obstructed by the platform or platform rails. The baffle can be expanded through tooling, and once expanded, the baffle can be held together by joints such as snap fits.

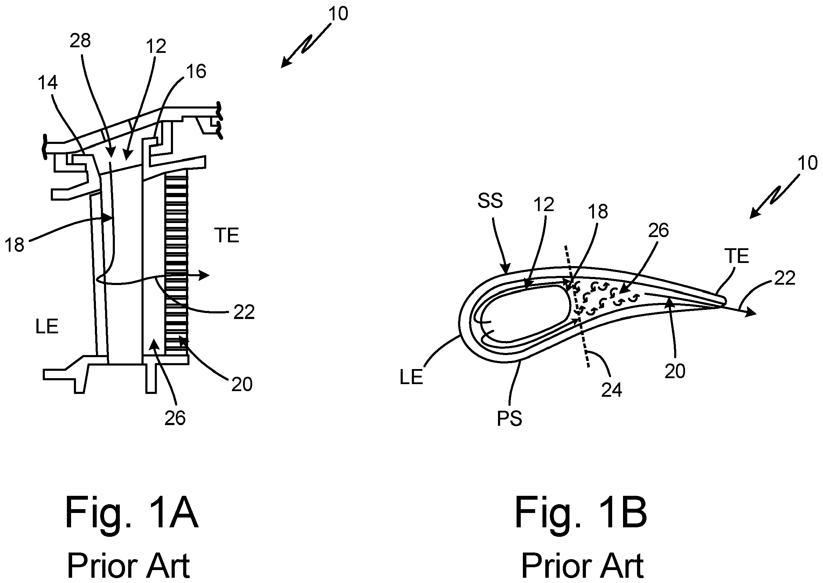

FIGS. 1A-1B illustrate airfoil vane 10 with baffle 12 as disclosed in prior art. Airfoil 10 contains forward rail 14, aft rail 16, cavity 18, cooling passage 20, cooling flow 22, aft rail obstruction line 24, aft baffle region 26, and airfoil breakout hole 28.

Baffle 12 is a single segment baffle as found in prior art, and is inserted into airfoil 10 around vane rails 14, 16 through breakout hole 28 into cavity 18. Because baffle 12 is inserted around rails 14, 16, and is not capable of expansion, baffle 12 fills only part of cavity 18, extending axially up to aft rail obstruction line 24. This creates aft baffle region 26, which is unfilled by a baffle, and subject to poor cooling.

The aft length of baffle 12 is constrained by rails 14, 16. Past aft obstruction line 24, the height of aft baffle region 26 is very large, and cooling flow 22 through aft baffle region is poor. This results in reduced heat transfer and greater pressure losses.

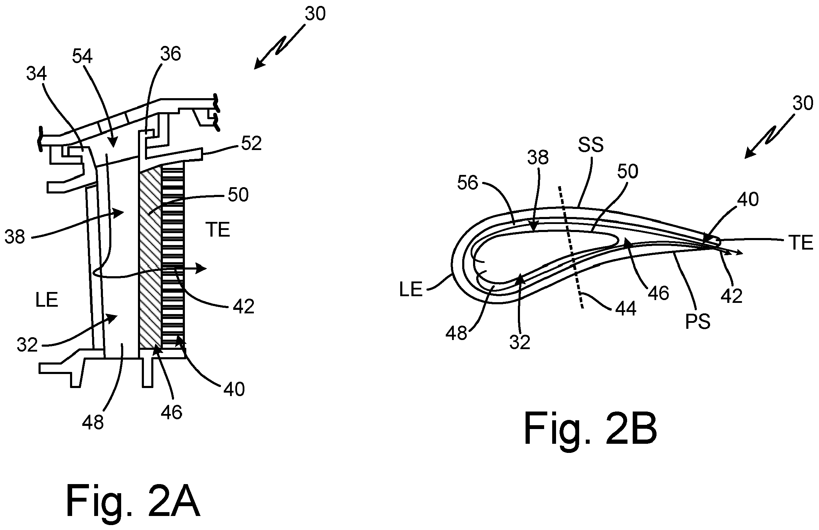

FIGS. 2A-2B show airfoil vane 30 with two-segment expanding baffle 32. Airfoil vane 30 contains forward rail 34, aft rail 36, cavity 38, cooling passage 40, cooling flow 42, aft rail obstruction line 44, aft region 46, platform 52, breakout hole 54, and gap 56. Baffle 32 contains first baffle segment 48 and second baffle segment 50. Airfoil vane 30 has leading edge (LE), trailing edge (TE), suction side (SS), and pressure side (PS). FIG. 2A shows a side view of airfoil vane 30 containing two-segment expanding baffle 32, and FIG. 2B shows a cross-sectional view of vane 30 along line A-A of FIG. 2A.

Airfoil vane 30 platform 52 hosts forward rail 34 and aft rail 36, which extend outward from vane 30 and allow security of airfoil vane 30. Cavity 38 internal to airfoil vane 30 can be reached through breakout hole 54. Unfortunately, aft rail 36 obstructs access to cavity 38. Thus, breakout hole 54 is much smaller than cavity 38. The portion of cavity 38 that is not reachable due to aft rail 36 is marked by aft rail obstruction line 44. This aft region (or 'second portion') 46 of cavity 38 is not directly accessible from breakout hole 54, due to obstruction by aft rail 36. The fore region (or 'first portion') of cavity 38 on the other (fore) side of aft rail obstruction line 44 is substantially aligned with breakout hole 54 in the axial (or spanwise) direction of the airfoil 30.

Cooling passages 40 proximate cavity 38 allow for internal airfoil cooling flow 42. The effectiveness of cooling flow 42 is determined in part by the shape and size of baffle 32, in addition to the width of gap 56 between baffle 32 and airfoil vane 30 cavity wall.

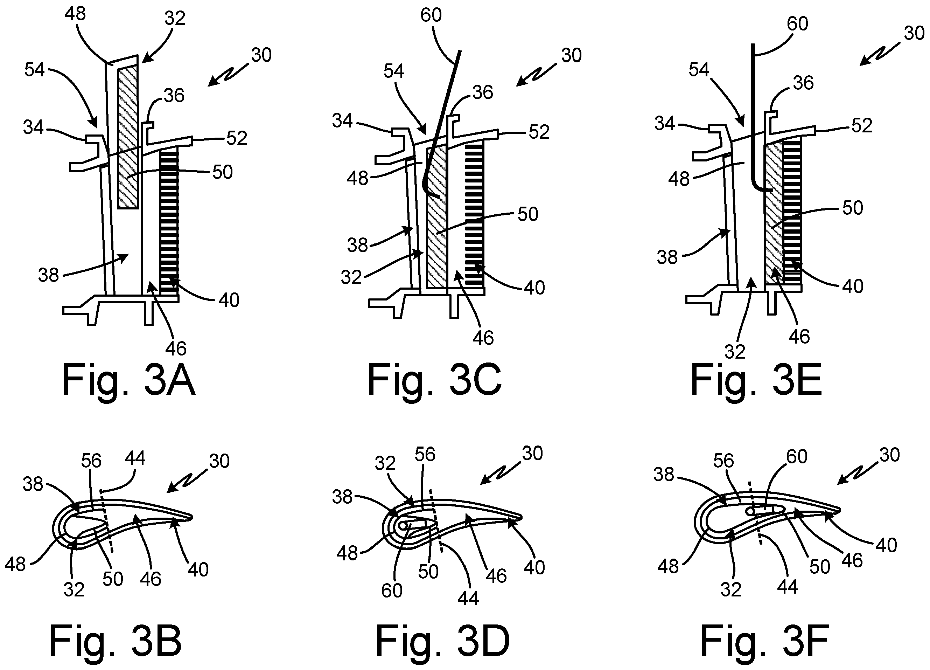

Baffle 32 contains first baffle segment 48 and second baffle segment 50. First baffle segment 48 is as large as breakout hole 54 will allow. That is, first baffle segment 48 can be inserted into cavity 38 (and in particular into the fore or first portion of cavity 38) through breakout hole 54. Second baffle segment 50 is smaller than first baffle segment 48, and can be nested in and encompassed by first baffle segment 48. First and second baffle segments 48, 50, can be either expanded (shown in FIGS. 2A-2B) or collapsed (described with reference to FIGS. 3A-3F). Thus, second baffle segment 50 can be nested within first baffle segment 48 so that collapsed two-segment expanding baffle 32 can fit through breakout hole 54 into cavity 38 of airfoil vane 30. Upon insertion, two-segment expanding baffle 32 can be expanded so that two-segment expanding baffle 32 fills cavity 38.

Using two-segment expanding baffle 32, aft region 46 can be filled by second baffle segment 50. Second baffle segment 50 is insertable past aft rail obstruction line 44 in its collapsed form. Because aft region 46 contains baffle 32, cooling passage 40 height is reduced to gap 56. This causes increased coolant Mach numbers, increased convective heat transfer coefficient, and reduced pressure losses. As a result, airfoil vane 30 cooling and lifespan are improved.

FIGS. 3A-3F are views of a method of inserting two-segment expanding baffle 32 into airfoil vane 30. As discussed with reference to FIGS. 2A-2B, Airfoil vane 30 contains forward rail 34, aft rail 36, cavity 38, cooling passage 40, aft rail obstruction line 44, aft region 46, platform 52, breakout hole 54, and gap 56. Baffle 32 contains first baffle segment 48 and second baffle segment 50. Airfoil vane 30 has leading edge (LE), trailing edge (TE), suction side (SS), and pressure side (PS). The components 32-56 of airfoil 30 and baffle 32 are the same as those described in reference to FIGS. 2A-2B, unless otherwise noted. Tooling 60 is used while inserting two-segment expanding baffle 32 into airfoil vane 30.

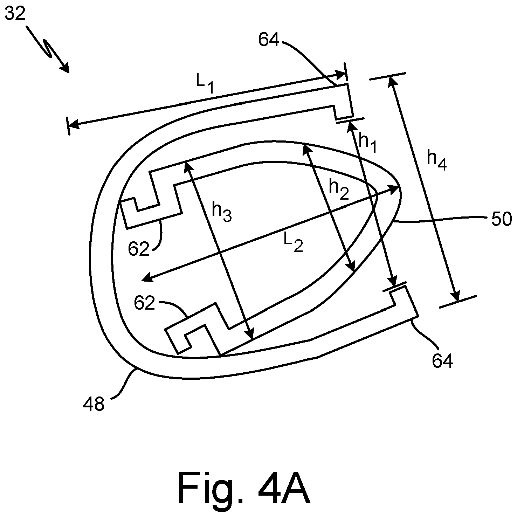

FIGS. 3A-3B show the step of inserting two-segment expanding baffle 32 into breakout hole 54. FIG. 3A shows a side view of airfoil vane 30 as baffle 32 is inserted, and FIG. 3B shows a cross-sectional view of vane 30 along line A-A of FIG. 3A. In FIGS. 3A-3B, two-segment expanding baffle 32 is collapsed. Second baffle segment 50 is nested within first baffle segment 48. Thus, the volume which baffle 32 takes up is less than baffle 32 when in an expanded state. This is described in more detail with reference to FIGS. 4A-4B below.

When two-segment expanding baffle 32 is in a collapsed state, it can fit through breakout hole 54 around aft rail 36 and into cavity 38. First baffle segment 48 is as large as breakout hole 54 allows, while second baffle segment 50 is fully encompassed by first baffle segment 48. If two-segment expanding baffle 32 was in an expanded state, it would not fit through breakout hole 54 and would be obstructed by aft rail 36, preventing insertion.

FIGS. 3C-3D show the step of expanding two-segment expanding baffle 32 after insertion of collapsed two-segment expanding baffle 32 into cavity 38. FIG. 3C shows a side view of airfoil vane 30 as baffle 32 is expanded, and FIG. 3D shows a cross-sectional view of vane 30 along line A-A of FIG. 3C.

Here, tooling 60 is used to translate second baffle segment 50 out of first baffle segment 48. Tooling 60 is inserted into airfoil vane 30, specifically into baffle 32 forward of second baffle segment 50. Tooling 60 is used to translate second baffle segment 50 out of first baffle segment 48. Tooling 60 can be a simple crowbar, or a tool manufactured to specifically fit with two-segment expanding baffle 32.

As tooling 60 is used to translate second baffle segment 50 out of two-segment expanding baffle 32, two-segment expanding baffle 32 expands to fill cavity 38 beyond aft rail obstruction line 44. This makes gap 56 smaller, and increases efficient cooling.

FIGS. 3E-3F show the step of expanding and locking in place baffle 32. FIG. 3E shows a side view of airfoil vane 30 as baffle 32 is secured, and FIG. 3F shows a cross-sectional view of vane 30 along line A-A of FIG. 3E.

Tooling 60 is used to translate second baffle segment 50 in the aft direction until second baffle segment 50 locks in place with first baffle segment 48 to fully expand two-segment expanding baffle 32. Second baffle segment 50 can lock in place with first baffle segment 48 by means of a snap joint (FIGS. 4A-4B), or other means of securing first baffle segment 48 and second baffle segment 50 together within cavity 38. When fully inserted and expanded, two-segment expanding baffle 32 should stay in place within cavity 38, providing more effective cooling to airfoil vane 30.

FIGS. 4A-4E are schematic diagrams of two-segment expanding baffle 32, illustrating means by which second baffle segment 50 is retained in its axially extended position. As discussed with reference to FIGS. 2A-2B, baffle 32 contains first baffle segment 48 and second baffle segment 50, in addition to snap fit joints 62, 64. Tool 60 is shown expanding baffle 32.

FIG. 4A shows a cross section of two-segment expanding baffle 32 in a collapsed state. Here, second baffle segment 50 is smaller than and nested within first baffle segment 48. This allows for baffle 32 to fit through an obstructed breakout hole into the cavity of an airfoil. First baffle segment 48 contains snap joints 64, which are shape to mate with snap joints 62 on second baffle segment 50. Here, first baffle segment 48 has a longer length (L₁) than the length of second baffle segment 50 (L₂) so that second baffle segment 50 fits within first baffle segment 48.

Also shown here are the heights across baffle 32. Height 1 (h₁) is the height across the end part of first baffle segment 48 between snap joints 64. Height 1 is the height where snap joints 62, 64 will join when baffle 32 is expanded and first baffle segment 48 and second baffle segment 50 are joined. Height 1 (h₁) is the "opening height" for baffle 32.

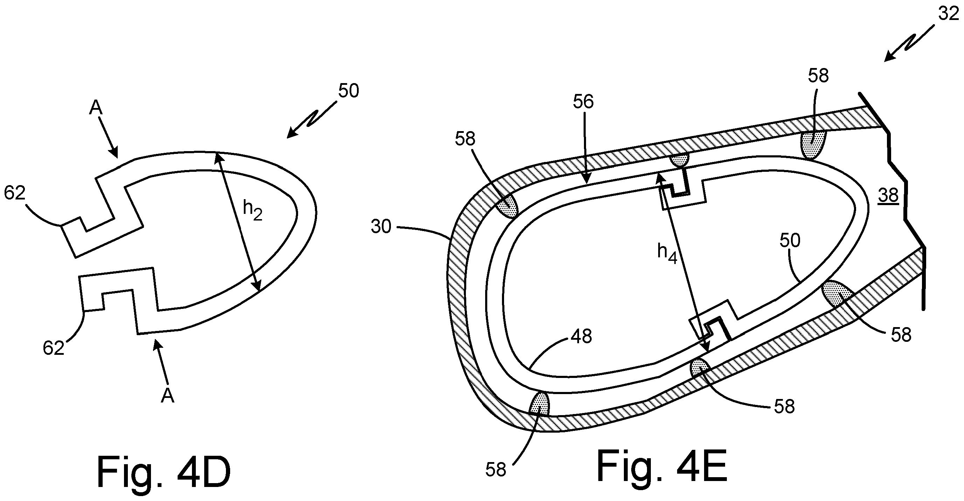

Second baffle segment 50 bends and changes shape as it is expanded from first baffle segment 48. Thus, the change of heights across second baffle segment 50 is dependent on the shape of second baffle segment 50. Height 2 (h₂) is the consistent height of second baffle segment 50 near the trailing edge of second baffle segment 50. Height 2 does not change as second baffle segment 50 is translated from collapsed to expanded state. Thus, height 2 (h₂) is the minimum "squeeze height" of baffle 32, and also the height at the trailing edge of baffle 32. The "squeeze height" is the minimum height attainable by squeezing baffle 32 without buckling baffle 32. This is illustrated in FIG. 4D.

Height 3 (h₃) is the height across second baffle segment 50 when second baffle segment 50 is nested within first baffle segment 48. Height 3 can be larger than height 1, and as such, does not stay consistent when second baffle segment is translated to an expanded state. Height 3 is also the height at the leading edge of baffle 32.

In contrast, first baffle segment 48 is rigid compared to second baffle segment 50. Height 4 (h₄) is the height at the trailing edge of first baffle segment 48, and is consistent whether baffle 32 is collapsed or expanded.

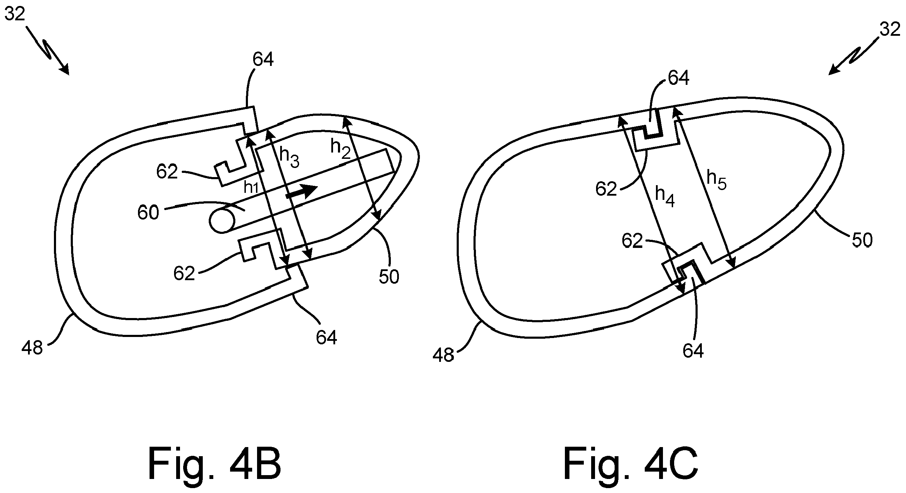

FIG. 4B shows a cross section of two-segment expanding baffle 32 during expansion. Here, second baffle segment 50 is forcing itself open and staying in contact with first baffle segment 48 as tool 60 translates second baffle segment 50 in an aft direction (towards the trailing edge of airfoil vane 30). As second baffle segment 50 translates aft, first baffle segment 48 pinches second baffle segment 50, causing height 3 (h₃) to get smaller until height 3 is less than height 1 (h₁).

FIG. 4C shows a cross-section of two-segment expanding baffle 32 in a final snap fit configuration. Here, two-segment expanding baffle 32 is fully expanded. Snap joints 62, 64 are built to snap into place when second baffle segment 50 slides along first baffle segment 48. Once fully expanded and snapped in place, two-segment expanding baffle 32 has a smooth baffle exterior with gap 56 in cavity 38 of airfoil vane 30 minimized. Here, second baffle segment 50 is still loaded, trying to force itself open. This holds snap joints 62, 64 in place. Snap joints 62, 64 additionally prevent axial shift of baffle segments 48, 50. Snap joints 62, 64, in baffle 32 are shown here as hooks 62 and protrusions 64, but can be other appropriate shapes to create a snap joint. In FIG. 4C, Height 5 (h₅) is the final height of second baffle segment 50 when baffle 32 is fully expanded and locked in place. The relationship between height 5 (h₅) and height 4 (h₄) is such that the gap 56 between airfoil vane 30 cavity wall and first baffle segment 48 is the same as the gap 56 between airfoil vane 30 cavity wall and second baffle segment 50.

FIG. 4D shows a cross-section of second baffle segment 50 in a pinched configuration, similar to the position second baffle segment 50 is in FIG. 4B. Here, pressure is being applied to second baffle segment 50 across arrows A, reducing the space between snap joints 62. In the diagram, the pinch is the greatest pinch that baffle 32 can sustain without buckling and/or snap fits 62, 64 being compressed against one another halting further pinch. Height 2 is the maximum cross-sectional height of baffle 32 in this configuration. In the scenario where baffle 32 is on the edge of buckling and/or permanent deformation, height 2 is governed by characteristics of baffle 32 including baffle material, baffle material thickness, geometry of the baffle, and other characteristics. In this 'maximum pinched/minimum height' configuration, h₂ is the minimum possible height that baffle segment two can be squeezed to. Therefore, to fit through the gap at the aft end of baffle segment one, height 2 must always be less than height 1.

FIG. 4E shows a cross-section of two-segment expanding baffle 32 situated in cavity 38 of airfoil 30. Two-segment expanding baffle 32 contains first baffle segment 48 and second baffle segment 50.

Two-segment expanding baffle 32 is held in place within cavity 38 by baffle standoffs 58. Baffle standoffs 58 are protrusions from walls of cavity 38 which secure baffle 32 and prevent baffle 32 from expanding too far. This allows for definition of gap 56, which is turn allows for efficient cooling airflow. Baffle standoffs 58 also ensure height 4 (h₄) is consistent, and does not expand too far. Thus, height 4 (h₄) does not change as baffle 32 is inserted and snapped together within cavity 38.

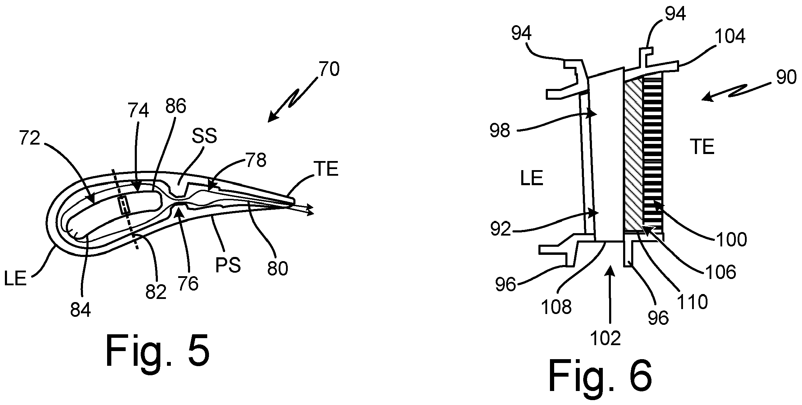

FIG. 5 is a cross-sectional view of multi-cavity airfoil vane 70 containing expanded multi-segment baffle 72. Airfoil vane 70 contains main cavity 74, impingement rib 76, second cavity 78, cooling flow 80, and aft rail obstruction line 82. Baffle 72 contains first baffle segment 84 and second baffle segment 86. Airfoil vane 70 has leading edge (LE), trailing edge (TE), suction side (SS), and pressure side (PS).

A multi-segmented expanding baffle is not limited to airfoils with a single cavity. For instance, multi-segment baffle 72 in FIG. 5 fills main cavity 78, increasing efficiency of airfoil cooling from LE to impingement rib 76. Airfoils with similar complex cavities or multiple cavities can employ such a multi-segmented baffle so that the cavities have better cooling. Generally, baffles according the present disclosure can be inserted into complex, constricted, and/or axially wide cavities through comparatively axially small apertures.

FIG. 6 is a side view of airfoil vane 90 with baffle-obstructing inner diameter rails 96 and containing an expanded multi-segment baffle 92. Airfoil vane 90 includes inner diameter (ID) rails 96, outer diameter (OD) rails 94, cavity 98, cooling passage 100, breakout hole 102, platform 104, and aft region 106. Baffle 92 contains first baffle segment 108 and second baffle segment 110. Airfoil vane 90 has leading edge (LE), trailing edge (TE), suction side (SS), and pressure side (PS).

In airfoil vane 90, a baffle can be inserted from the ID (not the OD) side. Thus, OD rails 94 are not obstructing access to cavity 98. Instead, ID rails 96 block access to cavity 98 through breakout hole 102, and in particular prevent insertion of a traditional baffle into aft region 106.

But multi-segment baffle 92 can be inserted through breakout hole 102 and then expanded similarly to the method described in reference to FIGS. 3A-3F. Multi-segment baffle can be inserted into cavity 98 in a collapsed state, and then second baffle segment 110 of baffle 92 can be translated in an aft direction to expand baffle 32 and fill aft region 106. This allows for more efficient cooling through cooling passage 100.

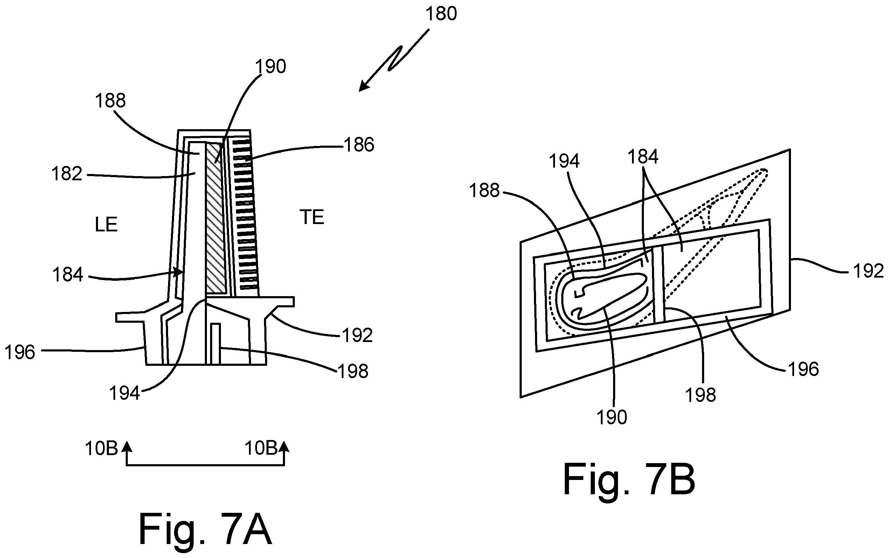

FIG. 7A is a side view of airfoil blade 180 containing multi-segmented expanding baffle 182. FIG. 7B shows airfoil blade 180 from a top down cross-sectional view. FIGS. 7A and 7B will be discussed together. Airfoil blade 180 includes cavity 184, cooling passage 186, platform 192, breakout hole 194, attachment 196, and attachment rib 198. Baffle 182 contains first baffle segment 188, and second baffle segment 190. Airfoil blade has leading edge (LE), and trailing edge (TE).

During manufacture of airfoil blades, baffles can be inserted into cavity 184 through breakout hole 194 to induce more efficient cooling of airfoil blades. While airfoil blade 180 does not have rails, airfoil blade does have attachment rib 198, which restricts access to cavity 184. Thus, multi-segmented expanding baffle 182 is useful in airfoil blade 180 to provide a baffle that fills cavity 184.

A multi-segmented expanding baffle allows for the baffle to fit through a breakout hole and around obstructions into a cavity, and then be expanded to fully fill the cavity and effect cooling air flow. A non-segmented baffle would not fit through an obstructed hole in the platform of an airfoil.

Because the cavity can be filled with the baffle, the baffle to cavity wall gap height can be controlled. This gap is often used to flow coolant through the airfoil and provide cooling. Reducing gap height using the multi-segmented expanding baffle allows an increase in Reynolds numbers, an increase in the convective heat transfer coefficient, and reduced pressure losses. This results in more effective airfoil cooling, increasing the lifespan of airfoils.

### Discussion of Possible Embodiments

The following are non-exclusive descriptions of possible embodiments of the present invention.

An airfoil cooling system includes an airfoil and a baffle. The airfoil includes a platform, an airfoil body extending from the platform, a main cavity in the airfoil body, and a breakout hole. The main cavity includes a first portion and a second portion. The breakout hole is in the platform axially aligned and sized with the first portion of the main cavity, wherein the breakout hole is misaligned with the second portion of the main cavity. The baffle is inside the main cavity, the baffle includes a first baffle segment filling the first portion of the main cavity, and a second baffle segment locked to and axially extendable from within the first baffle segment to fill the second portion of the main cavity.

The airfoil cooling system of the preceding paragraph can optionally include, additionally and/or alternatively, any one or more of the following features, configurations and/or additional components:
The first baffle segment and the second baffle segment are connected by a joint. The joint is selected from the group consisting of a snap joint, hooks, and a cap structure.

The airfoil cooling system includes a rail extending from the platform; the rail defining width of the breakout hole.

The airfoil cooling system includes a second cavity and an impingement rib defining the second cavity. The baffle is configured to fill the main cavity proximate the impingement rib.

The airfoil cooling system includes a baffle an obstruction extending from the platform; the obstruction severely obstructing the breakout hole.

A baffle for use in an airfoil includes a first segment having first and second snap joint protrusions, and a second segment nested within the first segment, the second segment having first and second snap joint recesses configured to lock with the first and second snap joint protrusions.

The baffle of the preceding paragraph can optionally include, additionally and/or alternatively, any one or more of the following features, configurations and/or additional components:
The one or more hooks and the one of more protrusions are configured to snap together.

The second baffle segment is smaller than the first baffle segment.

The first segment has a first length, the second segment has a second length, and wherein the first length is longer than the second length.

The first segment has a first height between the first and second snap joint protrusions.

The second segment has a second height at a trailing edge, and wherein the second height is smaller than the first height.

The second segment has a third height between the first and second snap joint recesses, and wherein the third height varies relative to the second height.

The first segment is rigid.

The second segment is bendable.

A method of inserting a baffle into an airfoil includes inserting an expanding baffle into a cavity of the airfoil through a breakout hole, wherein the expanding baffle comprises a first segment and a second segment, subsequently translating the second segment into the cavity of the airfoil in an aft direction to fill the cavity, and subsequently locking the second segment and the first segment to each other with a joint.

The method of the preceding paragraph can optionally include, additionally and/or alternatively, any one or more of the following features, configurations and/or additional components:
The second segment is nested within the first segment while inserting the expanding baffle.

Translating the second segment is done with a tool.

Securing the second segment and the first segment to each other comprises locking the second segment and the first segment to each other with a snap fit joint.

Securing the second segment and the first segment to each other comprises applying and curing an adhesive.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An airfoil cooling system comprising:
an airfoil (30; 70; 90; 180) comprising:
a platform (52; 104; 192);
an airfoil body extending from the platform (52; 104; 192);
a main cavity (38; 74; 98; 184) in the airfoil body, the main cavity (38; 74; 98; 184) comprising:
a first portion; and
a second portion (46; 106);
a breakout hole (54; 102; 194) in the platform (52; 104; 192) axially aligned and sized with the first portion of the main cavity (38; 74; 98; 184), wherein the breakout hole (54; 102; 194) is misaligned with the second portion (46; 106) of the main cavity (38; 74; 98; 184); and
a baffle (32; 72; 92; 182) inside the main cavity (38; 74; 98; 184), the baffle (32; 72; 92; 182) comprising:
a first baffle segment (48; 84; 108; 188) filling the first portion of the main cavity (38; 74; 98; 184); and
a second baffle segment (50; 86; 110; 190) locked to and axially extendable from within the first baffle segment (48; 84; 108; 188) to fill the second portion (46; 106) of the main cavity (38; 74; 98; 184).

2. The airfoil cooling system of claim 1, wherein the first baffle segment (48; 84; 108; 188) and the second baffle segment (50; 86; 110; 190) are connected by a joint (62, 64) selected from the group consisting of a snap joint (62, 64), hooks, and a cap structure.

3. The airfoil cooling system of claim 1 or 2, wherein the airfoil (30; 70; 90; 180) is a blade (180) or a vane (30; 70; 90).

4. The airfoil cooling system of claim 1, 2 or 3, further comprising a second cavity (78) and an impingement rib (76) defining the second cavity (78), wherein the baffle (72) is configured to fill the main cavity (74) proximate the impingement rib (76).

5. The airfoil cooling system of any preceding claim, further comprising an obstruction (36; 96; 198) axially aligned with the second portion (46; 106) and adjacent the breakout hole (54; 102; 194), wherein, optionally, the obstruction (36; 96; 198) is a rail (36; 96) extending from the platform, the rail (36; 96) defining a width of the breakout hole (54; 102; 194).

6. A baffle (32; 72; 92; 182) for use in an airfoil (30; 70; 90; 180) comprising:
a first segment (48; 84; 108; 188) having first and second snap joint protrusions (64); and
a second segment (50; 86; 110; 190) nested within the first segment (48; 84; 108; 188), the second segment (50; 86; 110; 190) having first and second snap joint recesses (62) configured to lock with the first and second snap joint protrusions (64).

7. The baffle of claim 6, wherein the first and second snap joint protrusions (64) are hooks.

8. The baffle of claim 6 or 7, wherein the first and second snap joint recesses (62) are grooves.

9. The baffle of claim 6, 7 or 8, wherein the second segment (50; 86; 110; 190) is smaller than the first segment (48; 84; 108; 188).

10. The baffle of any of claims 6 to 9, wherein the first segment (48; 84; 108; 188) has a first length (L₁), the second segment (50; 86; 110; 190) has a second length (L₂), and wherein the first length (L₁) is longer than the second length (L₂).

11. The baffle of any of claims 6 to 10, wherein the first segment (48; 84; 108; 188) has a first height (h₁) extending from the first snap joint protrusion (64) and the second snap joint protrusion (64), and, optionally, the second segment (50; 86; 110; 190) has a second height (h₂) at a trailing edge (TE), wherein the second height (h₂) is smaller than the first height (h₁), and, optionally, the second segment (50; 86; 110; 190) has a third height (h₃) between the first and second snap joint recesses (62), wherein the third height (h₃) is variable relative to the second height (h₂).

12. The baffle of any of claims 6 to 11, wherein the first segment (48; 84; 108; 188) is rigid, and/or the second segment (50; 86; 110; 190) is bendable.

13. A method of inserting a baffle (32; 72; 92; 182) into an airfoil (30; 70; 90; 180) comprising:
inserting an expanding baffle (32; 72; 92; 182) into a cavity (38; 74; 98; 184) of the airfoil through a breakout hole (54; 102; 194), wherein the expanding baffle (32; 72; 92; 182) comprises a first segment (48; 84; 108; 188) and a second segment (50; 86; 110; 190);
subsequently translating the second segment (50; 86; 110; 190) into the cavity (38; 74; 98; 184) of the airfoil in an aft direction to fill the cavity (38; 74; 98; 184); and
subsequently locking the second segment (50; 86; 110; 190) and the first segment (48; 84; 108; 188) to each other with a joint (62, 64).

14. The method of claim 13, wherein the second segment (50; 86; 110; 190) is nested within the first segment (48; 84; 108; 188) while inserting the expanding baffle, and/or translating the second segment (50; 86; 110; 190) is done with a tool (60).

15. The method of claim 13 or 14, wherein locking the second segment (50; 86; 110; 190) and the first segment (48; 84; 108; 188) to each other with a joint (62, 64) comprises locking the second segment (50; 86; 110; 190) and the first segment (48; 84; 108; 188) to each other with a snap fit joint (62, 64).
